# EUROPEAN PATENT APPLICATION

(11) **EP 4 631 919 A1**
(43) Date of publication of application: **15.10.2025**
(21) Application number: 24850344.3
(22) Date of filing: 12.11.2024
(51) Int. Cl.: C02F 1/42, B01D 15/22, C02F 1/00, B01D 24/28

(54) **WATER DISTRIBUTOR ASSEMBLY, TANK BODY ASSEMBLY AND WATER SOFTENING DEVICE**

(30) Priority: 01.03.2024 CN 202410236309; 01.03.2024 CN 202420402016 U
(71) Applicant: Foshan Shunde Midea Water Dispenser Mfg Co., Ltd., Foshan, Guangdong 528311 (CN); Midea Group Co., Ltd., Foshan, Guangdong 528311 (CN)
(72) Inventor: HE, Futian, Foshan, Guangdong 528311 (CN); XIN, Jun, Foshan, Guangdong 528311 (CN); ZHANG, Ye, Foshan, Guangdong 528311 (CN); LIU, Huachun, Foshan, Guangdong 528311 (CN); ZHU, Yunbo, Foshan, Guangdong 528311 (CN); PENG, Jing, Foshan, Guangdong 528311 (CN); LIAO, Yumin, Foshan, Guangdong 528311 (CN); LI, Zhonghua, Foshan, Guangdong 528311 (CN); LIU, Xiaowen, Foshan, Guangdong 528311 (CN); HU, Chenghuan, Foshan, Guangdong 528311 (CN); FENG, Zaifeng, Foshan, Guangdong 528311 (CN); ZHENG, Yuedong, Foshan, Guangdong 528311 (CN); GAO, Peng, Foshan, Guangdong 528311 (CN)
(74) Representative: Ran, Handong
(86) International application number: PCT/CN2024/131623
(87) International publication number: WO 2025/179954

(57) **Abstract**

The present invention relates to the field of water softening and provides a water distributor assembly, a tank body assembly, and a water softening device. The water distributor assembly includes a disk body, a bracket, and a filter screen. A periphery of the disk body abuts against an inner wall of the tank body assembly. The disk body includes a plurality of vertical ribs and a plurality of circular ribs. The plurality of circular ribs are distributed in concentric circle. The vertical rib is connected between any two adjacent circular ribs. The bracket is provided alongside the disk body, and includes a plurality of connecting ribs. An end of each of the connecting ribs is connected to a same circular rib, and the plurality of connecting ribs are provided at intervals along a circumferential direction of the circular rib, and each of the connecting ribs extends along an axis direction of the circular rib. The filter screen covers the disk body. In the water distributor assembly provided in the present invention, a hollow portion is formed between any adjacent connecting ribs. When water flows from the water distributor assembly into a resin layer, the hollow portion guides the water flow to flow radially outwards, which improves the efficiency and uniformity of ion exchange between the resin layer and the water flow.

## Description

### CROSS-REFERENCES TO RELATED APPLICATIONS

The present invention claims priority to Chinese patent application No. 202410236309.4 filed on March 01, 2024, entitled "Water Distributor Assembly, Tank Body Assembly, and Water Softening Device", and Chinese patent application No. 202420402016.4 filed on March 01, 2024, entitled "Water Distributor Assembly, Tank Body Assembly, and Water Softening Device", which are hereby incorporated by reference in their entireties.

### FIELD

The present invention relates to the field of water softening device, and in particular, to a water distributor assembly, tank body assembly, and water softening device.

### BACKGROUND

A water softening device is an apparatus that uses cation exchange resin to remove calcium and magnesium ions from water, which reduces the hardness of raw water, and softens hard water. Water softening device is currently widely used in industrial and energy systems, with strong device attributes. The soft water produced by the water softening device in household generally has the functions of reducing scale at bathrooms and water heating devices such as water heaters, wall-mounted boilers, electric water heaters, which avoids pipeline blockages, reduces the decay of heat exchange efficiency of heating devices, reduces the use of detergents, is more friendly to human skin, and makes clothes softer and brighter in color after washing.

### BRIEF SUMMARY

The present invention aims to solve at least one of the problems in the related art. Therefore, the present invention provides a water distributor assembly, to provide a uniform distribution of water flow.

The present invention provides a water distributor assembly, including:
a disk body, where a periphery of the disk body abuts against an inner wall of a tank body assembly, the disk body including a plurality of vertical ribs and a plurality of circular ribs, the plurality of circular ribs distributed in concentric circle, the vertical rib connected between any adjacent two circular ribs;
a bracket, where the bracket is provided alongside the disk body, the bracket including a plurality of connecting ribs, where an end of each of the connecting ribs is connected to a same circular rib, the plurality of connecting ribs provided at intervals along a circumferential direction of the circular rib, each of the connecting ribs extending along an axis direction of the circular rib; and
a filter screen, where the filter screen covers the disk body.

According to the water distributor assembly provided in the present invention, by providing the bracket at the disk body and providing connecting ribs at the bracket, a hollow portion is formed between any adjacent two connecting ribs. When water flows from the water distributor assembly into a resin layer, the hollow portion guides the water flow to flow radially outwards. A distance between any two adjacent connecting ribs is equal, to make the water flow be evenly distributed at a cross-section of the tank body, which improves the efficiency and uniformity of ion exchange between the resin layer and the water flow.

In some embodiments, a distance between any two adjacent circular ribs gradually increases in a radial outward direction of the circular ribs.

In some embodiments, the bracket further includes:
a support rib, where the support rib is in contact with a bottom of the tank body assembly.

In some embodiments, another end of each of the connecting ribs is connected to the support rib.

In some embodiments, the support rib is an annular rib.

In some embodiments, at least one of the connecting ribs is provided with a guide angle structure.

In some embodiments, the support rib is provided with a guide angle structure.

In some embodiments, at least one of the vertical ribs is provided with a process guide angle structure.

In some embodiments, at least one of the circular ribs is provided with a process guide angle structure.

In some embodiments, the connecting ribs are support columns.

In some embodiments, the filter screen has a mesh number of 80 to 400.

In some embodiments, the disk body further includes a perforated plate.

In some embodiments, the perforated plate is connected to both the circular ribs and the vertical ribs.

In some embodiments, the perforated plate is provided with a plurality of pinholes.

In some embodiments, the pinholes are arranged radially in a radial outward direction of the perforated plate.

In some embodiments, at least one pinhole is provided in an area enclosed by any two adjacent vertical ribs and two adjacent partial circular ribs.

In some embodiments, a center of the disk body is provided with a plug hole.

In some embodiments, a hole wall of the plug hole is connected to an innermost circular rib.

In some embodiments, the water distributor assembly further includes a central tube, and the central tube is threaded through the plug hole.

In some embodiments, the hole wall of the plug hole is provided with a step surface.

In some embodiments, the central tube abuts against the step surface.

In some embodiments, a depth of the plug hole is greater than a thickness of the circular rib.

The present invention further provides a tank body assembly, including:
a water distributor assembly, where the water distributor assembly is the above-mentioned water distributor assembly; and
a tank main body, where the water distributor assembly is provided inside the tank main body.

According to the tank body assembly provided in the present invention, as including the above-mentioned water distributor assembly, the tank body assembly also has the beneficial effects of the above-mentioned water distributor assembly, which are not repeated here.

In some embodiments, the periphery of the disk body is provided with a match portion.

In some embodiments, the match portion is in interference match with an inner wall of the tank main body.

In some embodiments, a peripheral wall of the disk body is provided with a seal slot.

In some embodiments, the match portion is a seal ring provided within the seal slot.

In some embodiments, the seal ring abuts against the inner wall of the tank main body.

In some embodiments, the match portion is a match protrusion provided at the peripheral wall of the disk body.

In some embodiments, the tank main body includes:
a tank body, where the disk body abuts against an inner wall of the tank body; and
a cover body, where the cover body is provided with an insert portion abutting against the tank body, to make the cover body be detachably connected to the tank body.

In some embodiments, the bracket abuts against the inner wall of the cover body.

In some embodiments, a free end of the insert portion abuts against the periphery of the disk body.

In some embodiments, the free end of the insert portion is provided with a groove.

In some embodiments, the periphery of the disk body extends outwards along an axial direction to form a protrusion.

In some embodiments, the protrusion matches with the groove to make the cover body limit the disk body.

In some embodiments, an inner wall of the cover body is a spherical surface.

In some embodiments, the bracket abuts against the spherical surface.

The present invention further provides a water softening device, including:
a tank body assembly, where the tank body assembly is the above-mentioned tank body assembly;
a water path component, where the water path component is connected to the tank main body of the tank body assembly; and
a control valve connected to the water path component, where the control valve is used to control switching of water path in the water path component.

According to the water softening device provided in the present invention, as including the above-mentioned tank body assembly, the water softening device also has the beneficial effects of the above-mentioned tank body assembly, which are not repeated here.

The present invention aims to solve at least one of the problems in the related art. Therefore, the present invention provides another water distributor assembly, which enables the water flow passing through the water distributor assembly to fully contact the resin inside the tank body assembly, which improves the resin utilization rate.

The present invention provides a water distributor assembly, including:
a disk body, where a periphery of the disk body abuts against an inner wall of a tank body assembly, the disk body including a plurality of vertical ribs and a plurality of circular ribs, the plurality of circular ribs distributed in concentric circle, the vertical rib connected between any adjacent two circular ribs, where a radius of an outer circular rib is greater than a radius of an inner circular rib in a radial outward direction of the circular ribs; and
a filter screen, where the filter screen covers the disk body.

According to the water distributor assembly provided in the present invention, a plurality of vertical ribs and circular ribs are provided, and the plurality of circular ribs are distributed in concentric circle. The vertical rib is connected between any two adjacent circular ribs. In the radial outward direction of the circular ribs, the radius of the outer circular rib is larger than the radius of the inner circular rib. In this way, in the radial outward direction of the disk body, the water flow through the disk body increases, which allows the water flow to fully contact the resin, and improves the resin utilization rate.

In some embodiments, the disk body further includes a block rib.

In some embodiments, the block rib and the circular ribs are distributed in concentric circle.

In some embodiments, the block rib is connected between any two adjacent vertical ribs.

In some embodiments, the disk body further includes a perforated plate.

In some embodiments, the perforated plate is connected to both the circular ribs and the vertical ribs.

In some embodiments, the perforated plate is provided with a plurality of pinholes.

In some embodiments, the pinholes are arranged radially outwards in the radial outward direction of the disk body.

In some embodiments, at least one pinhole is provided in an area enclosed by any two adjacent vertical ribs and two adjacent partial circular ribs.

In some embodiments, partial peripheral surface of the disk body is a spherical surface.

In some embodiments, the spherical surface abuts against an inner wall of the tank body assembly.

In some embodiments, at least one of the vertical ribs is provided with a process guide angle structure.

In some embodiments, at least one of the circular ribs is provided with a process guide angle structure.

In some embodiments, the filter screen has a mesh number of 80 to 400.

In some embodiments, an innermost circular rib encloses to form a plug hole.

In some embodiments, the water distributor assembly further includes a central tube, and the central tube is threaded through the plug hole.

In some embodiments, an inner wall of the plug hole is provided with a limit portion in a radial inward direction of the disk body.

In some embodiments, a periphery of the central tube is provided with an abut portion.

In some embodiments, the abut portion abuts against the limit portion.

In some embodiments, the abut portion is an annular protrusion provided at an outer peripheral wall of the central tube.

In some embodiments, the abut portions are plural, and the plurality of abut portions are provided at intervals along an outer circumferential direction of the central tube.

The present invention further provides a tank body assembly, including:
a water distributor assembly, where the water distributor assembly is the above-mentioned water distributor assembly; and
a tank main body, where the water distributor assembly is provided inside the tank main body.

According to the tank body assembly provided in the present invention, as including the above-mentioned water distributor assembly, thus the tank body assembly has the beneficial effects of the above-mentioned water distributor assembly, which are not repeated here.

In some embodiments, an innermost circular rib at the disk body is provided with a limit slot.

In some embodiments, a limit protrusion is provided inside the tank main body.

In some embodiments, the limit protrusion matches with the limit slot to fixedly connect the tank main body and the water distributor assembly.

In some embodiments, the tank main body includes:
a tank body, where the water distributor assembly is provided inside the tank body; and
a cover body, where the cover body is connected to the tank body through threads.

In some embodiments, the limit protrusion is provided inside the cover body.

The present invention further provides a water softening device, including:
a tank body assembly, where the tank body assembly is the above-mentioned tank body assembly;
a water path component, where the water path component is connected to a tank main body of the tank body assembly; and
a control valve, where the control valve is connected to the water path component, and the control valve is used to control switching of water path in the water path component.

According to the water softening device provided in the present invention, as including the above-mentioned tank body assembly, thus the water softening device has the beneficial effects of the tank body assembly, which are not repeated here.

The additional aspects and advantages of the present invention are provided in the following description, which become apparent from the following description, or are learned through the practice of the present invention.

### BRIEF DESCRIPTION OF THE DRAWINGS

To illustrate solutions in the embodiments of the present invention more clearly, the drawings used in the descriptions of the embodiments are briefly described below. The drawings in the following description are some embodiments of the present invention, and other drawings may be obtained based on these drawings without any creative effort for those skilled in the art.
FIG. 1 is a schematic structural diagram of a disk body and a bracket in a water distributor assembly according to the present invention;
FIG. 2 is a top view of FIG. 1;
FIG. 3 is a cross-sectional view along direction A-A in FIG. 2;
FIG. 4 is another schematic structural diagram of a disk body and a bracket in a water distributor assembly according to the present invention;
FIG. 5 is a sectional view of FIG. 4.
FIG. 6 is a schematic structural diagram of a tank body assembly according to the present invention;
FIG. 7 is an enlarged partial view of position A in FIG. 6;
FIG. 8 is an enlarged partial view of position B in FIG. 6;
FIG. 9 is another schematic structural diagram of a disk body in a water distributor assembly according to the present invention;
FIG. 10 is a schematic structural diagram of a disk body in a water distributor assembly according to the present invention;
FIG. 11 is a top view of FIG. 10;
FIG. 12 is a cross-sectional view along direction A-A in FIG. 11;
FIG. 13 is another schematic structural diagram of a disk body in a water distributor assembly according to the present invention;
FIG. 14 is another schematic structural diagram of a tank body assembly according to the present invention;
FIG. 15 is an enlarged partial view of position A in FIG. 14;
FIG. 16 is another schematic structural diagram of a disk body in a water distributor assembly according to the present invention;
FIG. 17 is a cross-sectional view along direction B-B in FIG. 16;
FIG. 18 is another schematic structural diagram of a tank body assembly according to the present invention; and
FIG. 19 is an enlarged partial view of position B in FIG. 18.

### Reference signs:

10: tank body assembly;
100: water distributor assembly;
110: disk body; 111: vertical rib; 112: circular rib; 113: plug hole; 114: step surface; 114-1: limit portion; 115: protrusion; 115-1: limit slot; 116: seal ring; 116-1: fan-shaped hole; 117: perforated plate; 1171: pinhole; 118: spherical surface; 119: block rib;
120: bracket; 121: connecting rib; 122: support rib; 123: support column;
130: central tube; 121-1: abut portion;
200: tank main body; 210: tank body; 220: cover body; 221: insert portion; 222: groove; 223: limit protrusion.

### DETAILED DESCRIPTION

Implementation of the present invention is further described in detail below with reference to the drawings and embodiments. The following embodiments are intended to illustrate the present invention, but are not intended to limit the scope of the present invention.

In the description of the embodiments of the present invention, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present invention and simplifying the description, rather than indicating or implying that the device or component stated must have a particular orientation, is constructed and operated in a particular orientation, and thus is not to be construed as limiting the embodiments of the present invention. Moreover, the terms "first", "second", "third", and the like are used for descriptive purposes only and are not to be construed as indicating or implying relative importance.

In the description of the present invention, it should be noted that unless explicitly specified and defined otherwise, the terms "connected to" and "connected" shall be understood broadly, for example, it may be either fixedly connected or detachably connected, or may be integrated; it may be either mechanically connected, or electrically connected; it may be either directly connected, or indirectly connected through an intermediate medium. The specific meanings of the terms above in the present invention may be understood by those skilled in the art in accordance with specific conditions.

In the embodiments of the present invention, unless otherwise clearly stated and defined, the first feature being located "on" or "under" the second feature means that the first feature is in direct contact with the second feature or the first feature is in contact with the second feature by an intervening media. In addition, the first feature is "on", "above" and "over" the second feature may refer to that the first feature is directly above or obliquely above the second feature, or simply refer to that the level height of the first feature is higher than that of the second feature. The first feature is "under", "below" and "beneath" the second feature may refer to that the first feature is directly below or obliquely below the second feature, or simply refer to that the level height of the first feature is lower than that of the second feature.

In the description of this specification, description with reference to the terms "an embodiment", "some embodiments", "an example", "specific example", "some examples" and the like, refers to that specific features, structures, materials or characteristics described in combination with an embodiment or an example are included in at least an embodiment or example according to the embodiments of the present invention. In this specification, schematic representations of the above terms are not necessarily directed to a same embodiment or example. Furthermore, the particular features, structures, materials or characteristics described may be combined in any suitable manner in any one or more embodiments or examples. In addition, those skilled in the art may combine the different embodiments or examples described in this specification, as well as the features of the different embodiments or examples, without conflicting each other.

In the related art, water softening device is an apparatus that uses cation exchange resin to remove calcium and magnesium ions from water, which reduces the hardness of raw water, and softens hard water. Water softening device is currently widely used in industrial and energy systems, with strong device attributes. The soft water produced by the water softening device in household generally has the functions of reducing scale at bathrooms and water heating devices such as water heaters, wall-mounted boilers, electric water heaters, which avoids pipeline blockages, reduces the decay of heat exchange efficiency of heating devices, reduces the use of detergents, is more friendly to human skin, and makes clothes softer and brighter in color after washing.

The applicant found that in the related art, the water distributor assembly of the water softening device is provided inside the tank body assembly, and the tank body assembly is provided with resin. Under the action of gravity, the structure of the resin is stacked, making the water production and regeneration efficiency relatively low. Moreover, the water distributor assembly in the water softening device generally has a small diameter of the disk body, and the water distribution area is limited to the radius of the disk body. The water distribution area cannot cover the entire cross-section of the tank body assembly, which results in a low utilization rate of the resin for water production and regeneration, and cannot fully utilize the performance of the resin.

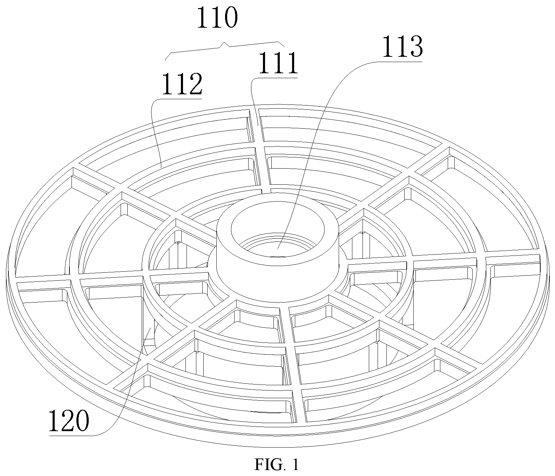

As shown in FIG. 1 to FIG. 8, the present invention provides a water distributor assembly 100, including a disk body 110 and a bracket 120. It should be noted that the water distributor assembly 100 is used in the tank body assembly of the water softening device. Inside of the tank body assembly is provided with resin, and the water distributor assembly 100 may evenly distribute the incoming water flow in the tank body assembly, which ensures that the water flow may flow evenly through the resin layer, and improves the efficiency and uniformity of ion exchange between the resin layer and the water. The water distributor assembly 100 also prevents resin particles from flowing out of the tank body with water, which ensures that the resin particles remain in the tank and allows water to pass through. In addition, the water distributor assembly 100 may also serve as a support layer to prevent resin particles from moving due to water flow impact, which maintains the stability and effective working volume of the resin layer.

In an embodiment, as shown in FIG. 1 to FIG. 3, a periphery of the disk body 110 abuts against an inner wall of the tank body assembly. The disk body 110 includes a plurality of vertical ribs 111 and a plurality of circular ribs 112, and the plurality of circular ribs 112 are distributed in concentric circle. The vertical rib 111 is connected between any two adjacent circular ribs 112. The bracket 120 is provided alongside the disk body 110, and the bracket 120 is used to support the disk body 110. The bracket 120 includes a plurality of connecting ribs 121, an end of each of the connecting ribs 121 is connected to a same circular rib 112. The plurality of connecting ribs 121 are provided at intervals along a circumferential direction of the circular rib 112, and each of the connecting ribs 121 extends along an axis direction of the circular rib 112. A hollow portion is formed between any adjacent two connecting ribs 121. When water flows from the water distributor assembly 100 into the resin layer, the hollow portion guides the water flow to flow radially outwards, and then the water flow may be evenly distributed at the cross-section of the tank body. The filter screen covers the disk body 110 to prevent resin particles from leaking out of the disk body 110, and the filter screen may further provide additional filtering effect to ensure the purity of the output water.

In addition, in some examples, a distance between any two adjacent connecting ribs 121 is equal, which further guides the water flow uniformly.

According to the water distributor assembly 100 provided in the embodiments of the present invention, by providing the bracket 120 at the disk body 110 and providing the connecting ribs 121 at the bracket 120, a hollow portion is formed between any adjacent two connecting ribs 121. When water flows from the water distributor assembly 100 into the resin layer, the hollow portion guides the water flow to flow radially outwards. A distance between any two adjacent connecting ribs 121 is equal, and then the water flow may be evenly distributed at a cross-section of the tank body, which improves the efficiency and uniformity of ion exchange between the resin layer and the water flow.

As shown in FIG. 1, in some embodiments of the present invention, a distance between any two adjacent circular ribs 112 gradually increases in a radial outward direction of the circular ribs 112. In an embodiment of the present invention, as shown in FIG. 1, there are eight vertical ribs 111 arranged uniformly along the circumferential direction, and each vertical rib 111 extends along a radial direction of the circular rib 112. There are four circular ribs 112, and the four circular ribs 112 are distributed in concentric circle. A fan-shaped hole is formed between the circular ribs 112 and the vertical ribs 111. In a radial outward direction of the disk body 110, a radial width of the fan-shaped hole is L0, L1, and L2 in sequence, where L0 < L1 < L2. The water flow may be diverted through the fan-shaped hole at the water distributor assembly 100. In the radial outward direction of the disk body 110, an increasing amount of water flow may be passed through the fan-shaped hole, which allows more water flow to pass through an outer part of the disk body 110, and relatively reduces the water flow through a central part of the disk body 110.

In this way, when the water flow passes the fan-shaped hole formed by the vertical ribs 111 and the circular ribs 112, the water flow is guided and dispersed to various areas inside the tank body, which may evenly distribute the water flow at the cross-section of the tank body. This not only ensures that the water flow may fully contact the resin layer in the tank body, and maximizes the ion exchange efficiency of the resin, but also makes the flow velocity distribution of the water flow more uniform when passing through the resin layer, which reduces the problem of uneven resin utilization or back flow that may be caused by uneven water flow.

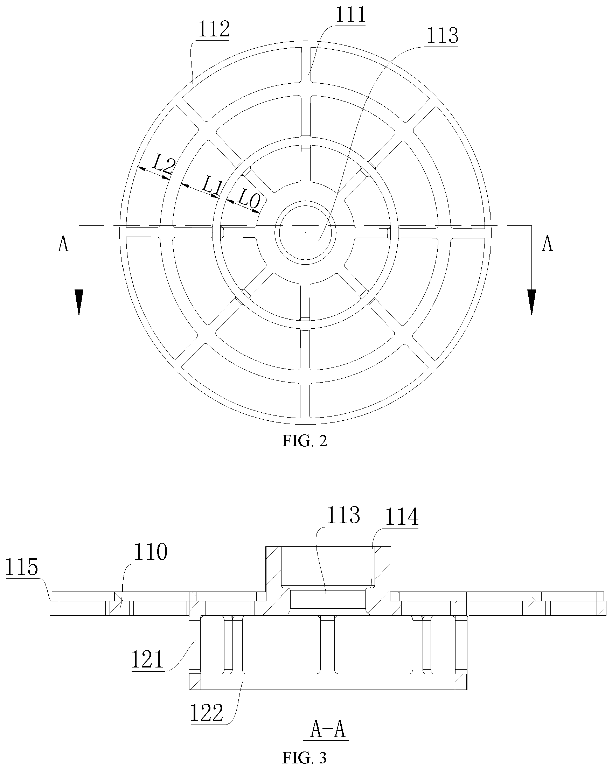

As shown in FIG. 3, in some embodiments of the present invention, the bracket 120 further includes a support rib 122, the support rib 122 contacts a bottom of the tank body assembly, and another end of each of the connecting ribs 121 is connected to the support ribs 122. The support ribs 122 may increase the structural stability of the entire bracket 120. When flowing through the water distributor assembly 100, water may exert a certain pressure at the bracket 120. The presence of the support ribs 122 may prevent unnecessary deformation or bending of the bracket 120, which ensures that the bracket 120 maintains the original shape and stability.

As shown in FIG. 3, in some embodiments of the present invention, the support rib 122 is an annular rib, which may form a continuous annular support structure at the bottom of the tank body assembly, which ensures that the support rib 122 is evenly distributed throughout the bottom area of the tank body assembly, provides uniform support force to the disk body 110, and helps to maintain the stability of the entire water distributor assembly 100. Compared to a single central support point, the annular rib is able to evenly distribute its own weight in the bottom area of the tank body assembly, which helps to avoid single point pressure in the bottom area of the tank body assembly, and reduces the risk of damage to the bottom area of the tank body.

In an embodiment of the present invention, at least one connecting rib 121 is provided with a guide angle structure. A process guide angle structure may increase the guide effect of the connecting rib 121 on water, which improves and guides the water path for a more efficient and uniform distribution of water flow. The guide angle structure is formed at a water flow contact surface of the connecting rib 121, and the angle and shape of the guide angle structure create a smooth turning effect of the water flow when contacting the connecting rib 121. The guide angle structure not only reduces the direct impact of water flow on the connecting rib 121, which reduces wear of the connecting rib 121, but also helps to reduce turbulence and uneven velocity distribution that may occur when water flow passes the resin layer. The providing mode of the guide angle structure is not limited to this. In other embodiments of the present invention, the guide angle structure may also be provided at the support rib 122, or in other embodiments, at least one vertical rib 111 is also provided with a guide angle structure, or the guide angle structure may also be provided at least one circular rib 112.

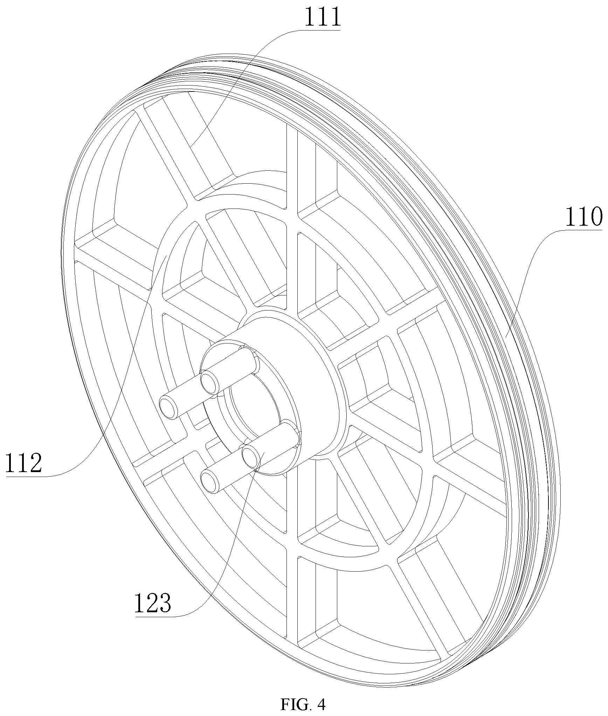

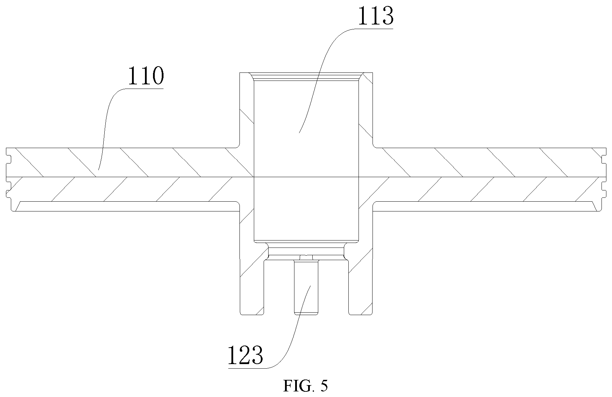

As shown in FIG. 4 and FIG. 5, in an embodiment of the present invention, the connecting rib 121 may be a plurality of support columns 123, and a quantity of support columns 123 may be 4-8. For example, as shown in FIG. 4, the quantity of support columns may be 4. In this way, by designing a plurality of support columns, the bracket 120 may adapt to tank body assemblies of different sizes and shapes, which improves the adaptability of the bracket 120. In addition, a plurality of support columns 123 help to evenly distribute the pressure of the water flow at the bracket 120, which avoids single point pressure and stress concentration at the bottom of the tank main body 200, and improves the durability of the tank bottom.

In some embodiments of the present invention, the filter screen has a mesh number of 80 to 400. For example, the filter screen has a mesh number of 100, and the filter screen may block resin particles and maintain the smoothness of water flow, which avoids water flow blockage or pressure loss caused by small pores at the filter screen.

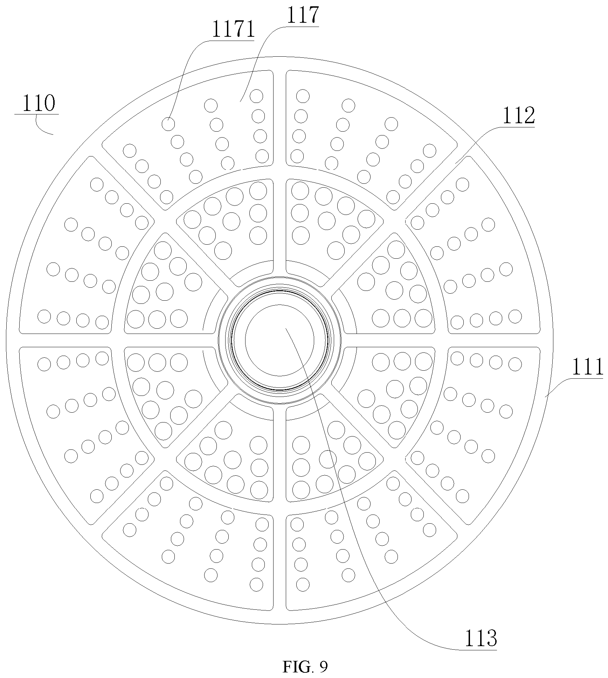

As shown in FIG. 9, in an embodiment of the present invention, the disk body 110 further includes a perforated plate 117, where the perforated plate 117 is connected to both circular ribs 111 and vertical ribs 112. The perforated plate 117 is provided with a plurality of pinholes 1171, which are arranged radially outwards in the radial outward direction of the disk body 110. There is at least one pinhole 1171 in an area enclosed by any adjacent two vertical ribs 112 and adjacent two partial circular ribs 111. The pinholes 1171 at the perforated plate 117 may further disperse the water flow, which makes the water flow more evenly distributed inside the tank body 210, increases the contact area between the water flow and the resin, and improves the efficiency of ion exchange. The provision of pinholes 1171 may also prevent resin particles from moving due to an impact of water flow, which maintains the stability and effective working volume of the resin layer. In addition, the providing of the perforated plate 117 may enhance the structural stability of disk body 110, improve the load-bearing capacity of disk body 110, and prevent deformation of disk body 110 under water flow impact.

As shown in FIG. 9, in an embodiment of the present invention, the plurality of pinholes 1171 are arranged in concentric circle around a center of the disk body 110, which further enables the disk body 110 to evenly distribute water flow. In addition, by adjusting the quantity of pinholes 1171 and the sizes of pinholes 1171, the distribution of water may be adjusted to make the water flow more uniform across the entire cross-section, which further improves the water distribution effect in the regeneration state, and increases the water production.

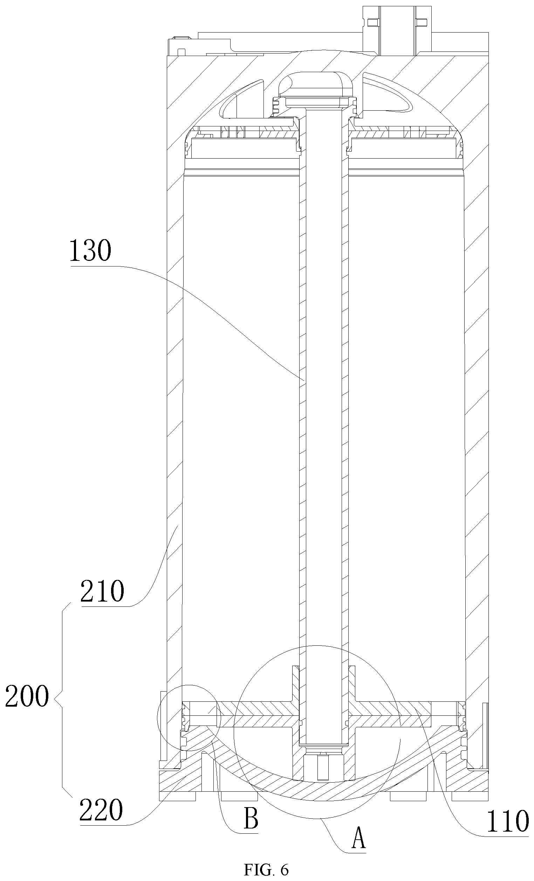

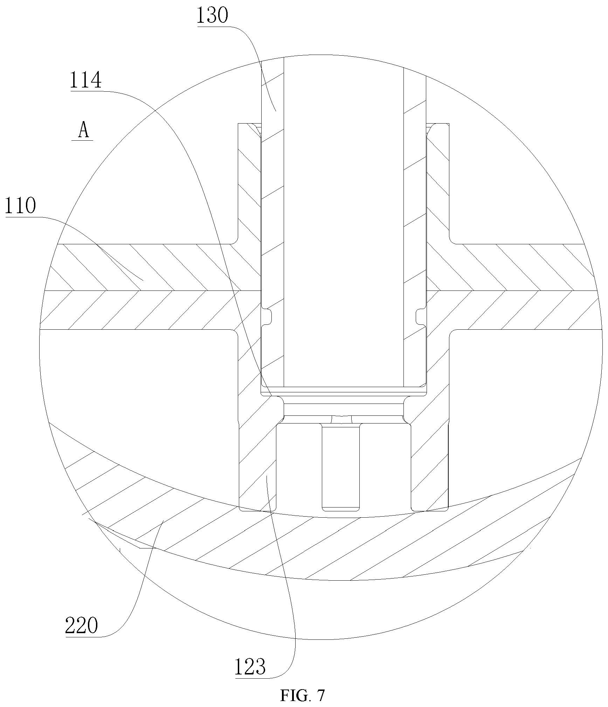

As shown in FIG. 6 and FIG. 7, in some embodiments of the present invention, the water distributor assembly 100 further includes a central tube 130, and the softened water flow due to displacement reaction with the resin may flow out of the tank body assembly through the central tube 130. In an embodiment, during a resin regeneration operation, the regeneration liquid may flow into the tank body assembly from the central tube 130 and enter the resin layer. A center of the disk body 110 is provided with a plug hole 113, a hole wall of the plug hole 113 is connected to an innermost circular rib 112, and the central tube 130 is threaded through the plug hole 113. The size and shape of the plug hole 113 are matched with the central tube 130, and the central tube 130 may be stably threaded through the plug hole 113, which reduces a problem of looseness or wear between the central tube 130 and the disk body 110 caused by water flow impact and mechanical vibration.

As shown in FIG. 3 and FIG. 7, in some embodiments of the present invention, the hole wall of the plug hole 113 is provided with a step surface 114, and the central tube 130 abuts against the step surface 114. The central tube 130 may limit the disk body 110 and prevent the disk body 110 from moving in the axial direction due to the action of water flow pressure. In addition, by providing the step surface 114, an operator may determine a correct insertion depth of the central tube 130, which avoids excessive or insufficient insertion of the central tube 130 in the plug hole 113, and make the mounting procedure more efficient and accurate. When the central tube 130 abuts against the step surface 114, a position of the water distributor assembly 100 in the tank may be determined, which helps ensure the correct mount position of the water distributor assembly 100 and thus guarantees the performance of the water distributor assembly 100. In addition, the step surface 114 may serve as a seal surface, which increases a contact area between the central tube 130 and the plug hole 113, is beneficial for mounting the seal ring 116 or other seal members, and improves the overall seal performance of the water distributor assembly 100.

As shown in FIG. 3, in some embodiments of the present invention, a depth of the plug hole 113 is greater than a thickness of the circular rib 112. In this way, when the central tube 130 is inserted into the plug hole 113, it may ensure that the central tube 130 is provided with a deeper insertion length, which provides better support and positioning for the central tube 130. In addition, the hole depth is greater than the thickness of the circular rib 112, which may also reduce the possibility of stress concentration at the edge of the circular rib 112 caused by insertion, prevents damage or deformation of the circular rib 112, and improves the durability and reliability of the entire structure of the water distributor assembly 100. The deeper plug hole 113 further provides more operating space for mounting and disassembling the central tube 130.

As shown in FIG. 6, the present invention further provides a tank body assembly, including the above-mentioned water distributor assembly 100 and a tank main body 200. The water distributor assembly 100 is provided inside the tank main body 200, and the tank main body 200 is further provided with a resin layer. It should be noted that there is resin inside the tank main body 200, and two ends of the central tube 130 are both provided with the disk body 110. The water distributor assembly 100 may perform forward and reverse washing on the resin layer inside the tank main body 200. During forward washing, the to-be-softened water is diverted by the disk body 110 at an end of the central tube 130 to the resin layer inside the tank main body 200. After ion exchange with the resin layer, the to-be-softened water becomes softened water and finally flows out of the tank main body 200 through the central tube 130. During reverse washing, regeneration liquid enters the tank main body 200 from the central tube 130, and then flows through the disk body 110 to the resin layer inside the tank main body 200, which regenerates the resin layer.

According to the tank body assembly provided in the present invention, as including the above-mentioned water distributor assembly 100, the tank body assembly also has the beneficial effects of the above-mentioned water distributor assembly 100, which are not repeated here.

As shown in FIG. 4, in some embodiments of the present invention, the periphery of the disk body 110 is provided with a match portion, where the match portion is in interference fit with an inner wall of the tank main body 200. In this way, resin leakage from the gap between the disk body 110 and the tank main body 200 may be prevented. In addition, the positioning accuracy of the disk body 110 at the tank main body 200 may be improved, and the anti-vibration capability of the water distributor may be enhanced. This ensures that the disk body 110 may still maintain a fixed position during the operation of the water softening device, which reduces the probability of displacement under the influence of water flow pressure or mechanical vibration.

In addition, due to the direct interference fit between the match portion and the inner wall of the tank main body 200, additional fix members such as screws or adhesives may be reduced during the mounting of the water distributor, which simplifies the assembly of the water distributor assembly 100, and improves assembly efficiency. Moreover, the interference fit between the match portion and the tank main body 200 may form a tight interface between the water distributor and the tank body 210, which may prevent resin particles from leaking. Due to the stability of the position of the water distributor, it may ensure that the water flow passes uniformly through the distributor and effectively contacts the resin layer, which may ensure the uniformity and effectiveness of ion exchange during water treatment.

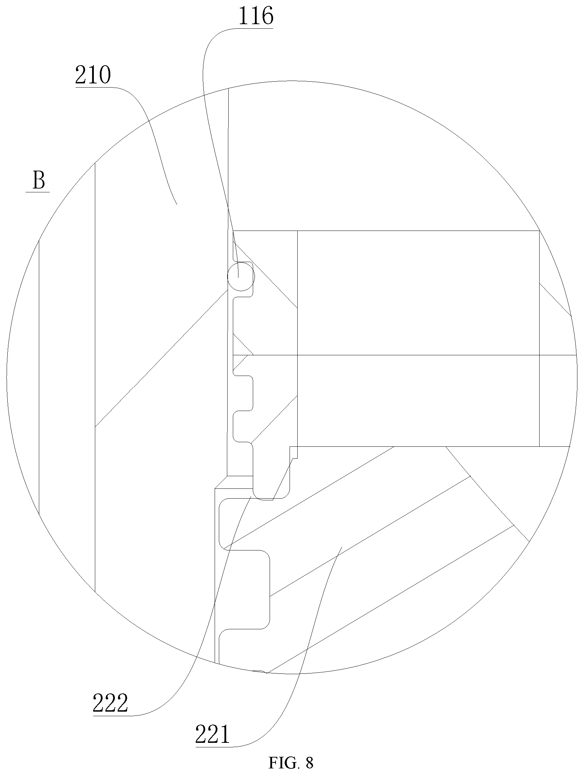

As shown in FIG. 8, in some embodiments of the present invention, the peripheral wall of the disk body 110 is provided with a seal slot, the match portion is a seal ring 116 provided at the seal slot, and the seal ring 116 abuts against the inner wall of the tank main body 200. In this way, the seal between the disk body 110 and the tank main body 200 may be increased, which prevents resin leakage to the outside of the water distributor assembly 100, and improves the accuracy and efficiency of water quality treatment. In addition, the providing of the seal ring 116 may prevent sediment, particles, or other impurities that may be carried by the water flow from entering the interior of the tank body assembly, which provides additional protection for the water distributor assembly 100 and resin layer. The seal ring 116 may be made of silicone or other rubber seal materials and integrally formed with the disk body 110 through dual material injection molding for sealing and preventing resin leakage.

As shown in FIG. 4, in some embodiments of the present invention, the match portion is a match protrusion provided at the peripheral wall of the disk body 110, and the match protrusion is in interference fit with the inner wall of the tank main body 200, which improves the positioning accuracy of the water distributor at the tank main body 200. In addition, when the disk body 110 is mounted into the tank main body 200, a stable interference fit may be realized through simple pressing or tapping, which simplifies the mounting.

As shown in FIG. 6, in some embodiments of the present invention, the tank main body 200 includes a tank body 210 and a cover body 220. The disk body 110 abuts against an inner wall of the tank body 210, and the cover body 220 is provided with an insert portion 221, where the insert portion 221 abuts against the tank body 210, to make the cover body 220 and the tank body 210 be detachably connected. In this way, a good seal effect may be provided between the cover body 220 and the tank body 210, which prevents water or resin leakage, and ensures that the water is not contaminated during the water treatment. The bracket 120 abuts against an inner wall of the cover body 220, which provides additional support for the disk body 110, ensures that the water distributor assembly 100 remains stable under the pressure of water flow, and prevents deformation or displacement caused by gravity or fluid dynamics.

As shown in FIG. 8, in some embodiments of the present invention, a free end of the insert portion 221 abuts against the periphery of the disk body 110, and the insert portion 221 may provide additional mechanical support for the water distributor assembly 100, which ensures the correct positioning of the disk body 110 in the tank main body 200, ensures the stability of the disk body 110 in the tank main body 200, prevents displacement of the disk body 110, and maintains the uniformity of water flow through the resin layer.

As shown in FIG. 8, in some embodiments of the present invention, the free end of the insert portion 221 is provided with a groove 222, and the periphery of the disk body 110 extends outwards along an axial direction to form the protrusion 115. The protrusion 115 matches with the groove 222 to facilitate the cover body 220 limit the disk body 110, to further restrict the movement of the disk body 110 in the tank body, which further improves the stability of the entire water distributor assembly 100. Especially under changes in water flow and pressure, it may effectively prevent the disk body 110 from moving and affecting water distribution. Using the groove 222 and the protrusion 115 to limit the disk body 110 may reduce wear or damage of parts caused by improper mounting or long-term use.

As shown in FIG. 6 and FIG. 7, in some embodiments of the present invention, the inner wall of the cover body 220 is a spherical surface, and the bracket 120 abuts against the spherical surface. In this way, the spherical surface may provide good water flow guidance, which allows water to flow smoothly along the spherical surface, reduces flow resistance and vortex generation, and improves the stability and uniformity of water flow. The design of the spherical surface may reduce dead corners of water flow more effectively than a right angle or sharp angle design, which helps avoid local circulation of water flow at the inner wall of the cover body 220, reduce the formation of stagnant areas, and thus improve water treatment efficiency. Spherical surfaces are easier to clean than flat or other shapes, with no edges or corners, which reduces the possibility of dirt and biofilm adhesion, and maintains the long-term cleanliness and efficient operation of the water distribution system. Due to the continuous curvature of the spherical surface, it has better structural strength and stability when subjected to pressure, which helps to improve the durability of the device.

The present invention further provides a water softening device (not shown in the figures), including the above-mentioned tank body assembly (not shown in the figures), water path component (not shown in the figures), and control valve (not shown in the figures). The water path component is connected to the tank main body 200 of the tank body assembly, and the control valve is connected to the water path component. The control valve is used to control switching of the water path in the water path component.

According to the water softening device provided in the present invention, as including the above-mentioned tank body assembly, thus the water softening device has the beneficial effects of the tank body assembly, which are not repeated here.

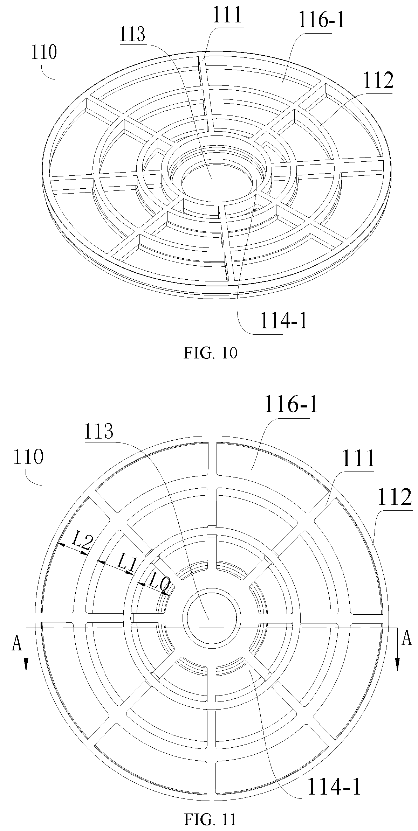

As shown in FIG. 10 to FIG. 15, the present invention further provides a water distributor assembly 100. It should be noted that the water distributor assembly 100 is used in the tank body assembly 10 of the water softening device. Inside of the tank body assembly 10 is provided with resin, and the water distributor assembly 100 may evenly distribute the incoming water flow in the tank body assembly 10, which ensures that the water flow may flow evenly through the resin layer, and improves the efficiency and uniformity of ion exchange in the water. The water distributor assembly 100 also prevents resin particles from flowing out of the tank body 210 with water, which ensures that the resin particles remain in the tank and allows water to pass through. In addition, the water distributor assembly 10 may also serve as a support layer to prevent resin particles from moving due to water flow impact, which maintains the stability and effective working volume of the resin layer.

In an embodiment, as shown in FIG. 10 and FIG. 11, the water distributor assembly 100 includes a disk body 110 and a filter screen. A periphery of the disk body 110 abuts against an inner wall of the tank body assembly 10, and the inner wall of the tank body assembly 10 may radially limit the disk body 110 and prevent radial movement of the disk body 110 inside the tank body assembly 10. The disk body 110 includes a plurality of vertical ribs 111 and a plurality of circular ribs 112, and the plurality of circular ribs 112 are distributed in concentric circle. The vertical rib 111 is connected between any adjacent two circular ribs 112. In the radial outward direction of the circular ribs 112, a radius of the circular rib 112 at outer side is greater than a radius of the circular rib 112 at the inner side.

In some examples, as shown in FIG. 10, there are eight vertical ribs 111 arranged uniformly along a circumferential direction, and each vertical rib 111 extends along a radial direction of the circular rib 112. There are four circular ribs 112, and the four circular ribs 112 are distributed in concentric circle. A fan-shaped hole 116-1 is formed between the circular ribs 112 and the vertical ribs 111. In a radial outward direction of the disk body 110, a radial width of the fan-shaped hole 116-1 is L0, L1, and L2 in sequence, where L0 < L1 < L2. After entering the tank body assembly 10, the water flow may be diverted through the fan-shaped hole 116-1 at the water distributor assembly 100. In the radial outward direction of the disk body 110, an increasing amount of water flow may be passed through the fan-shaped hole 116-1, which allows more water flow to pass through an outer part of the disk body 110, and relatively reduces the water flow through a central part of the disk body 110.

In this way, after the water flow enters the tank body assembly 10, and passes the fan-shaped hole 116-1 formed by the vertical ribs 111 and the circular ribs 112, the water flow is guided and dispersed to various areas inside the tank body 210, which may evenly distribute the water flow at the cross-section of the tank body 210. This not only ensures that the water flow may fully contact the resin layer in the tank body 210, and maximizes the ion exchange efficiency of the resin, but also makes the flow velocity distribution of the water flow more uniform when passing through the resin layer, which reduces the problem of uneven resin utilization or back flow that may be caused by uneven water flow.

The filter screen covers the disk body 110, which prevents resin particles from penetrating the filter screen and allows finer broken resin residues to be discharged. This may protect the resin particles from being carried out of the tank body 210 by water flow and help maintain the structural stability of the resin layer, and the resin particles may be firmly held in predetermined positions, which prolongs the effective service life of the resin.

According to the water distributor assembly 100 provided in the present invention, a plurality of vertical ribs 111 and circular ribs 112 are provided, and the plurality of circular ribs 112 are distributed in concentric circle. The vertical rib 111 is connected between any two adjacent circular ribs 112. In the radial outward direction of the circular ribs 112, the distance between any two adjacent circular ribs 112 gradually increases. In this way, in the radial outward direction of the disk body 110, the water flow through the disk body 110 increases, which allows the water flow to fully contact the resin, and improves the resin utilization rate.

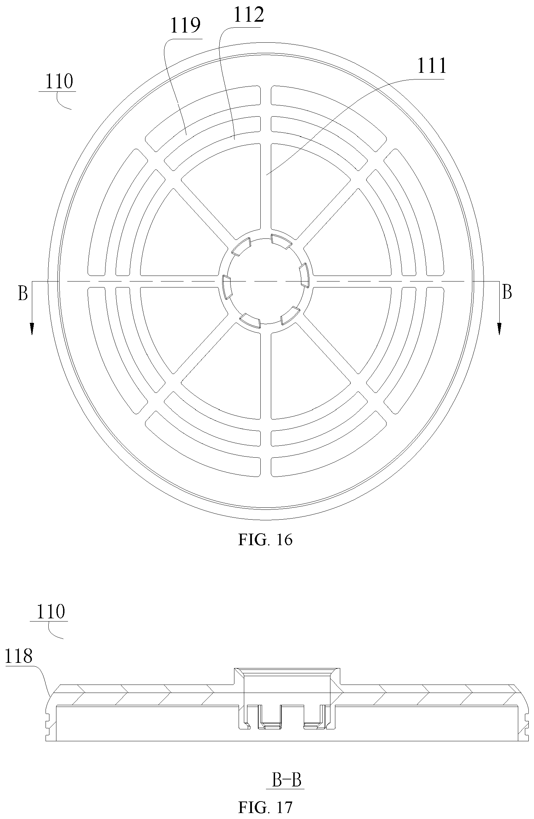

As shown in FIG. 16, in an embodiment of the present invention, the disk body 110 further includes a block rib 119, and the block rib 119 and the circular rib 112 are distributed in concentric circle. The block rib 119 is connected between any two adjacent vertical ribs 111. In this way, the block rib 119 may restrain a part of the water flow, to prevent the water flow from directly passing through the disk body 110 and entering the interior of the resin layer. As a result, the water flow is guided to spread along the circumferential direction of the disk body 110, which not only improves the uniformity of the water flow, but also enhances the water distributing capability of the disk body 110. This improvement ensures that the water flow may have more sufficient contact with the resin, which improves the utilization efficiency of the resin and the overall water production. In some embodiments of the present invention, the block rib 119 is provided between two outermost circular ribs 112 of the disk body 110, which may further enhance the water distributing capability of the disk body 110.

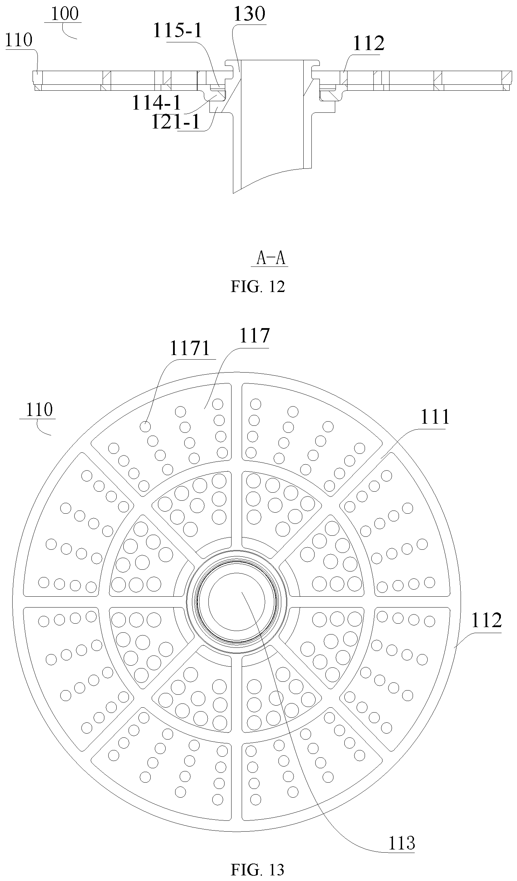

As shown in FIG. 13, in an embodiment of the present invention, the disk body 110 further includes a perforated plate 117, where the perforated plate 117 is connected to both circular ribs 112 and vertical ribs 111. The perforated plate 117 is provided with a plurality of pinholes 1171, which are arranged radially outwards in the radial outward direction of the disk body 110. There is at least one pinhole 1171 in an area enclosed by any adjacent two vertical ribs 111 and adjacent two partial circular ribs 112. The pinholes 1171 at the perforated plate 117 may further disperse the water flow, which makes the water flow more evenly distributed inside the tank body 210, increases the contact area between the water flow and the resin, and improves the efficiency of ion exchange. The provision of pinholes 1171 may also prevent resin particles from moving due to an impact of water flow, which maintains the stability and effective working volume of the resin layer. In addition, the providing of the perforated plate 117 may enhance the structural stability of disk body 110, improve the load-bearing capacity of disk body 110, and prevent deformation of disk body 110 under water flow impact.

As shown in FIG. 13, in an embodiment of the present invention, the plurality of pinholes 1171 are arranged in concentric circle around a center of the disk body 110, which further enables the disk body 110 to evenly distribute water flow. In addition, by adjusting the quantity of pinholes 1171 and the size of pinholes 1171, the distribution of water may be adjusted to make the water flow more uniform across the entire cross-section, which further improves the water distribution effect in the regeneration state, and increases the water production.

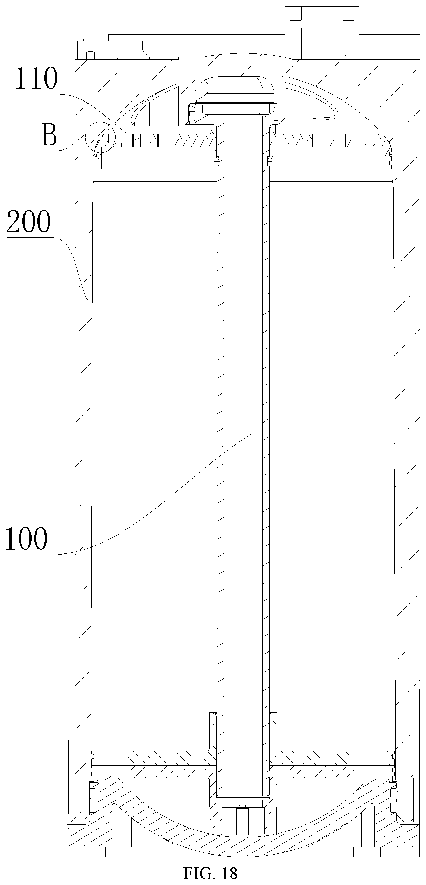

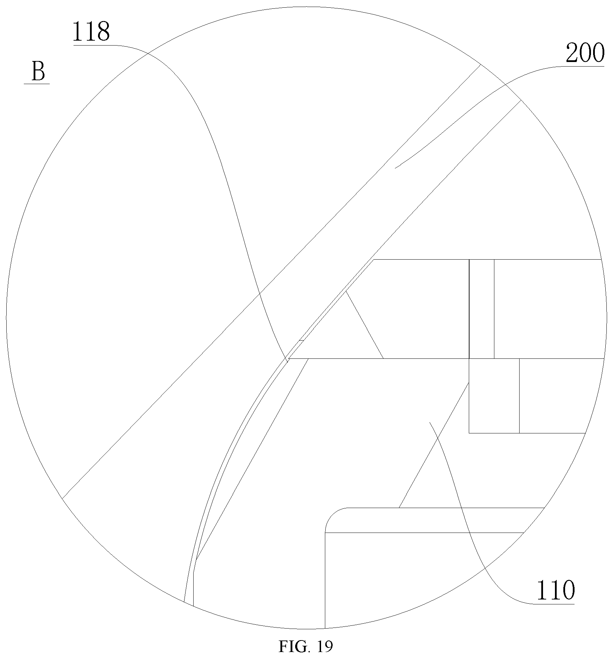

As shown in FIG. 17, FIG. 18, and FIG. 19, in an embodiment of the present invention, partial peripheral surface of the disk body 110 is a spherical surface 118, and partial inner wall of the tank body assembly 10 is provided as an arc-shaped surface matched with the spherical surface 118. The spherical surface 118 abuts against the inner wall of the tank body assembly 10, which limits the disk body 110 in an axial direction, prevents the disk body 110 from moving in the axial direction and affecting the water distribution performance. A contact position between the disk body 110 and the tank body assembly 10 may be sealed to prevent resin from leaking out from the contact position between the disk body 110 and the tank body assembly 10. In an embodiment of the present invention, at least one vertical rib 111 is provided with a process guide angle structure. The process guide angle structure may increase the guide effect of the vertical rib 111 on water, which improves and guides the water path, to provide a more efficient and uniform distribution of water flow. The process guide angle structure is formed at a water flow contact surface of the vertical rib 111, and the angle and shape of the process guide angle structure create a smooth turning effect for the water flow when the water flow contacts the vertical rib 111. The guide angle structure not only reduces the direct impact of water flow on the vertical rib 111, which reduces mechanical wear on the vertical rib 111, but also helps to reduce turbulence and uneven velocity distribution that may occur when water flow passes the resin layer. The providing mode of the process guide angle structure is not limited to this. In other embodiments of the present invention, at least one circular rib 112 is provided with a process guide angle structure.

By introducing the process guide angle structure, the guide effect for water flow through vertical ribs 111 and circular ribs 112 is enhanced, which results in a more balanced distribution of water flow at the cross-section of tank body 210. In this way, it may ensure that the water distributor assembly 100 provides more stable and consistent water flow guide during the operation of the water softening device, which further improves the contact efficiency of the resin layer and the uniformity of ion exchange.

In an embodiment of the present invention, the filter screen has a mesh number of 80 to 400. For example, the filter screen has a mesh number of 300, and the filter screen may block resin particles and maintain the smoothness of water flow, which avoids water flow blockage or pressure loss caused by small pores at the filter screen. During the operation of the water distributor assembly 100, the filter screen needs to be able to resist the impact of water flow, maintain structural integrity, and avoid frequent cleaning or replacement due to blockage. Therefore, the filter screen with the mesh number of 80 to 400 not only meets the requirements of operational efficiency, but also ensures the relatively low maintenance cost of the device.

As shown in FIG. 12, in an embodiment of the present invention, the water distributor assembly 100 further includes a central tube 130, and the softened water flow due to displacement reaction with the resin may flow out of the tank body assembly through the central tube 130. An innermost circular rib 112 of the disk body 110 encloses to form a plug hole 113. The size and shape of the plug hole 113 are matched with the central tube 130, and the central tube 130 may be stably threaded through the plug hole 113, which reduces a problem of looseness or wear of the water distributor assembly 100 caused by water flow impact and mechanical vibration. In addition, it also improves the seal performance of the water distributor assembly 100 and reduces the risk of leakage caused by the mixing of non-softened water and softened water in the tank body assembly 10.

As shown in FIG. 12, in an embodiment of the present invention, an inner wall of the plug hole 113 is provided with a limit portion 114-1 in a radial inward direction of the disk body 110, a periphery of the central tube 130 is provided with an abut portion 121-1, and the abut portion 121-1 abuts against the limit portion 114-1. In this way, the abut portion 121-1 may limit the disk body 110 and prevent the disk body 110 from moving in the axial direction under the impact of water flow or mechanical vibration.

In addition, the matched design of the limit portion 114-1 and the abut portion 121-1 in the present invention may also improve the assembly efficiency of the water distributor assembly 100. Due to the mutual match between the limit portion 114-1 and the abut portion 121-1, the operator may easily identify whether the central tube 130 has been mounted in place, and may quickly and accurately disassemble and re-mount the central tube 130 when maintenance or replacement of the central tube 130 is needed.

As shown in FIG. 12, in an embodiment of the present invention, the abut portion 121-1 is an annular protrusion provided at an outer peripheral wall of the central tube 130. In this way, when the central tube 130 is inserted into the disk body 110, the annular protrusion may cover a connect gap between the central tube 130 and the disk body 110, which prevents resin leakage from the connect gap between the central tube 130 and the disk body 110. The providing mode of the abut portion 121-1 is not limited to a single annular protrusion. In other embodiments of the present invention, the abut portion 121-1 may be plural, and the plurality of abut portions 121-1 are provided at intervals along an outer circumferential direction of the central tube 130. This multi-point abut structure enhances the stability of the central tube 130 in the plug hole 113 and provides seal points at different positions, which further improves the seal performance and durability of the assembly.

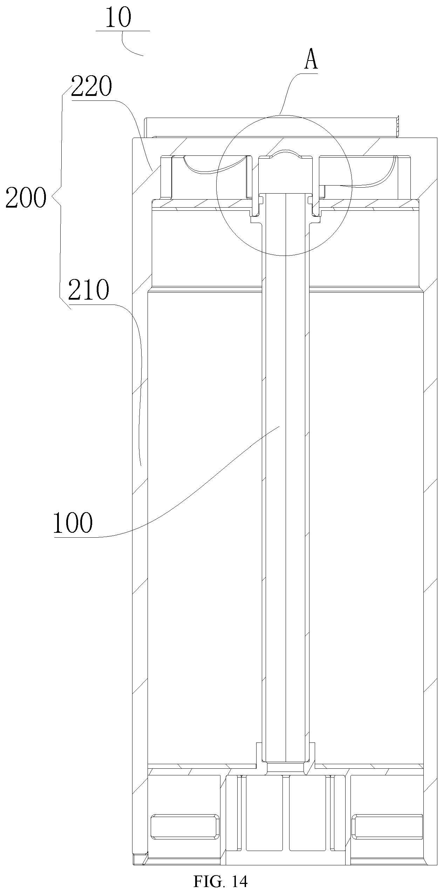

As shown in FIG. 14, the present invention further provides a tank body assembly 10, including a water distributor assembly 100 and a tank main body 200. The water distributor assembly 100 is the above-mentioned water distributor assembly 100, which is provided inside the tank main body 200. Inside of the tank main body 200 is also provided with resin, and tap water is guided into the tank main body 200 through the disk body 110 in the water distributor assembly 100. When tap water passes through the resin layer, the ion exchange between the resin and water promotes the displacement reaction of hardness ions such as calcium and magnesium ions in the tap water. Through the displacement reaction, the hardness ions in the water are effectively removed, and the water is softened. After the softening treatment is completed, the water flow treated with the resin layer enters the central tube 130 of the tank body assembly 10, which allows the water flow to flow steadily and smoothly out of the tank body 210 from the central tube 130.

According to the tank body assembly 10 provided in the present invention, as including the above-mentioned water distributor assembly 100, thus the tank body assembly 10 has the beneficial effects of the above-mentioned water distributor assembly 100, which are not repeated here.

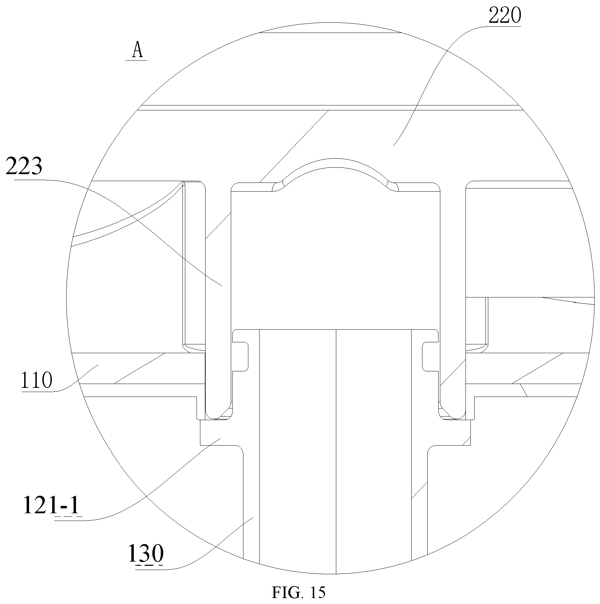

As shown in FIG. 15, in an embodiment of the present invention, an innermost circular rib 112 at the disk body 110 is provided with a limit slot 115-1, inside of the tank main body 200 is provided with a limit protrusion 223. During assembly, the limit protrusion 223 is embedded with the limit slot 115-1 for a fixed connection between the water distributor assembly 100 and the tank main body 200.

The fixed connection not only simplifies the mounting of the water distributor assembly 100 in the tank main body 200, which ensures the accuracy of assembly, but also strengthens the connection strength between the water distributor assembly 100 and the tank main body 200, which makes the position of the water distributor assembly 100 in the tank body 210 more stable, reduces the possible displacement or detachment of the water distributor assembly 100 due to mechanical vibration or transportation, and ensures the stability of the tank body assembly 10 during operation. In addition, the match between the limit slot 115-1 and the limit protrusion 223 also facilitates the maintenance or replacement of the water distributor assembly 100. During maintenance or replacement, the water distributor assembly 100 only needs to be removed from the limit slot 115-1.

As shown in FIG. 14, in an embodiment of the present invention, the tank main body 200 includes a tank body 210 and a cover body 220. Resin is provided inside the tank body 210, and the cover body 220 is used to seal the tank body 210, which ensures the sealing of the tank environment and the protection of resin. The water distributor assembly 100 is arranged inside the tank body 210 to evenly distribute the water flow entering the tank body 210, which promotes the ion exchange between tap water and resin.

The cover body 220 is connected to the tank body 210 through threads. The threaded connection between the cover body 220 and the tank body 210 simplifies the assembly and disassembly, improves the sealing of the tank body 210, and prevents the intrusion of external pollutants.

The limit protrusion 223 is inside the cover body 220, and the water distributor assembly 100 is provided inside the tank body 210. When the cover body 220 is threaded to the tank body 210, the limit protrusion 223 matches with the corresponding limit slot 115-1 at the water distributor assembly 100, which realizes a stable positioning of the water distributor assembly 100 inside the tank body 210. Such fixation ensures that the water distributor assembly 100 may maintain a static position under water pressure, flow, and other operating conditions, which avoids displacement or detachment caused by vibration or impact, and ensures the normal operation of the water softening device.

In addition, the design of the limit protrusion 223 also helps simplify the manufacturing and assembly of the tank body assembly 10, which reduces the possibility of assembly errors. The match between the limit protrusion 223 and the limit slot 115-1 provides intuitive assembly instructions, and operators may determine whether the assembly is correctly mounted. This not only improves assembly efficiency, but also reduces maintenance costs.

The present invention further provides a water softening device, including a tank body assembly 10, a water path component, and a control valve. The tank body assembly 10 is the above-mentioned tank body assembly 10. The water path component is connected to the tank main body 200 of the tank body assembly 10, and the control valve is connected to the water path component. The control valve is used to control switching of the water path in the water path component.

According to the water softening device provided in the present invention, as including the above-mentioned tank body assembly 10, the water softening device also has the beneficial effects of the above-mentioned tank body assembly 10, which are not repeated here.

Finally, it should be noted that the above embodiments are only used to illustrate the present invention and not to limit it. Although the present invention has been described in detail with reference to the embodiments, those skilled in the art should understand that various combinations, modifications, or equivalent substitutions of the solution of the present invention do not depart from the scope of the solution of the present invention, and should be covered within the scope of protection of the present invention.

## Claims

1. A water distributor assembly, comprising:
a disk body, wherein a periphery of the disk body abuts against an inner wall of a tank body assembly, the disk body comprising a plurality of vertical ribs and a plurality of circular ribs, the plurality of circular ribs distributed in concentric circle, each of the vertical ribs connected between any adjacent two circular ribs;
a bracket, provided alongside the disk body and comprising a plurality of connecting ribs, one end of each of the connecting ribs connected to the same circular rib, the plurality of connecting ribs provided at intervals along a circumferential direction of the circular ribs, and each of the connecting ribs extending along an axis direction of the circular ribs; and
a filter screen, covering the disk body.

2. The water distributor assembly of claim 1, wherein a distance between any two adjacent circular ribs gradually increases in a radial outward direction of the circular ribs.

3. The water distributor assembly of claim 1 or 2, wherein: the bracket further comprises:
a support rib, wherein the support rib is in contact with a bottom of the tank body assembly, and the other end of each of the connecting ribs is connected to the support rib.

4. The water distributor assembly of claim 3, wherein the support rib is an annular rib.

5. The water distributor assembly of claim 3 or 4, wherein at least one of the connecting ribs is provided with a guide angle structure; or
the support rib is provided with a guide angle structure; or
at least one of the vertical ribs is provided with a process guide angle structure; or
at least one of the circular ribs is provided with a process guide angle structure.

6. The water distributor assembly of any of claims 1-5, wherein each of the connecting ribs is a support column.

7. The water distributor assembly of any of claims 1-6, wherein the filter screen has a mesh number of 80 to 400.

8. The water distributor assembly of any of claims 1-7, wherein the disk body further comprises a perforated plate connected to both the circular ribs and the vertical ribs, and the perforated plate is provided with a plurality of pinholes, the pinholes arranged radially outwards in a radial outward direction of the perforated plate, at least one of the pinholes provided in an area enclosed by any two adjacent vertical ribs and two adjacent partial circular ribs.

9. The water distributor assembly of any of claims 1-8, further comprising a central tube, wherein a center of the disk body is provided with a plug hole, and a hole wall of the plug hole is connected to an innermost circular rib, the central tube threaded through the plug hole.

10. The water distributor assembly of claim 9, wherein the hole wall of the plug hole is provided with a step surface, the central tube abutting against the step surface.

11. The water distributor assembly of claim 9 or 10, wherein a depth of the plug hole is greater than a thickness of the circular rib.

12. A tank body assembly, comprising:
a water distributor assembly, wherein the water distributor assembly is the water distributor assembly of any of claims 1-11; and
a tank main body, wherein the water distributor assembly is provided inside the tank main body.

13. The tank body assembly of claim 12, wherein the periphery of the disk body is provided with a match portion being in interference match with an inner wall of the tank main body.

14. The tank body assembly of claim 13, wherein a peripheral wall of the disk body is provided with a seal slot, and the match portion is a seal ring provided within the seal slot, the seal ring abutting against the inner wall of the tank main body.

15. The tank body assembly of claim 13 or 14, wherein the match portion is a match protrusion provided at the peripheral wall of the disk body.

16. The tank body assembly of any of claims 12-15, wherein the tank main body comprises:
a tank body, wherein the disk body abuts against an inner wall of the tank body; and
a cover body, wherein the cover body is provided with an insert portion abutting against the tank body, to make the cover body be detachably connected to the tank body, and the bracket abuts against the inner wall of the cover body.

17. The tank body assembly of claim 16, wherein a free end of the insert portion abuts against the periphery of the disk body.

18. The tank body assembly of claim 16 or 17, wherein the free end of the insert portion is provided with a groove, the periphery of the disk body extending outwards along an axial direction to form a protrusion, the protrusion matching with the groove to make the cover body limit the disk body.

19. The tank body assembly of any of claims 16-18, wherein an inner wall of the cover body is a spherical surface, each of the connecting ribs abutting against the spherical surface.

20. A water softening device, comprising:
a tank body assembly, wherein the tank body assembly is the tank body assembly of any of claims 11-19;
a water path component, wherein the water path component is connected to the tank main body of the tank body assembly; and
a control valve connected to the water path component and used to control switching of water path in the water path component.

21. A water distributor assembly, comprising:
a disk body, wherein a periphery of the disk body abuts against an inner wall of a tank body assembly, the disk body comprising a plurality of vertical ribs and a plurality of circular ribs, the plurality of circular ribs distributed in concentric circle, each of the vertical ribs connected between any adjacent two circular ribs, wherein a distance between any adjacent two circular ribs increases in a radial outward direction of the circular ribs; and
a filter screen, wherein the filter screen covers the disk body.

22. The water distributor assembly of claim 21, wherein the disk body further comprises a block rib, the block rib and the circular ribs distributed in concentric circle, the block rib connected between any two adjacent vertical ribs.

23. The water distributor assembly of claim 21 or 22, wherein the disk body further comprises a perforated plate connected to both the circular ribs and the vertical ribs, and the perforated plate is provided with a plurality of pinholes, the pinholes arranged radially outwards in a radial outward direction of the perforated plate, at least one of the pinholes provided in an area enclosed by any two adjacent vertical ribs and two adjacent partial circular ribs.

24. The water distributor assembly of any of claims 21-23, wherein partial peripheral surface of the disk body is a spherical surface abutting against an inner wall of the tank body assembly.

25. The water distributor assembly of any of claims 21-24, wherein at least one of the vertical ribs is provided with a process guide angle structure; or
at least one of the circular ribs is provided with a process guide angle structure.

26. The water distributor assembly of any of claims 21-25, wherein the filter screen has a mesh number of 80 to 400.

27. The water distributor assembly of any of claims 21-26, further comprising a central tube, wherein an innermost circular rib encloses to form a plug hole, the central tube threaded through the plug hole.

28. The water distributor assembly of claim 27, wherein an inner wall of the plug hole is provided with a limit portion in a radial inward direction of the disk body, and a periphery of the central tube is provided with an abut portion abutting against the limit portion.

29. The water distributor assembly of claim 28, wherein the abut portion is an annular protrusion provided at an outer peripheral wall of the central tube.

30. The water distributor assembly of any of claims 27-29, wherein the abut portions are plural, and the plurality of abut portions are provided at intervals along an outer circumferential direction of the central tube.

31. A tank body assembly, comprising:
a water distributor assembly, wherein the water distributor assembly is the water distributor assembly of any of claims 21-30; and
a tank main body, wherein the water distributor assembly is provided inside the tank main body.

32. The tank body assembly of claim 31, wherein an innermost circular rib at the disk body is provided with a limit slot, wherein a limit protrusion is provided inside the tank main body, the limit protrusion matching with the limit slot to fixedly connect the tank main body and the water distributor assembly.

33. The tank body assembly of claim 32, wherein the tank main body comprises:
a tank body, wherein the water distributor assembly is provided inside the tank body; and
a cover body, wherein the cover body is connected to the tank body through threads, the limit protrusion provided inside the cover body.

34. A water softening device, comprising:
a tank body assembly, wherein the tank body assembly is the tank body assembly of any of claims 31-33;
a water path component, connected to the tank main body of the tank body assembly; and
a control valve, connected to the water path component, and used to control switching of water path in the water path component.
